# EUROPEAN PATENT APPLICATION

(11) **EP 4 741 482 A1**
(43) Date of publication of application: **13.05.2026**
(21) Application number: 25215104.8
(22) Date of filing: 11.11.2025
(51) Int. Cl.: C12G 1/00, B01J 19/10, C12G 3/07

(54) **METHOD OF REFINING AN ALCOHOLIC BEVERAGE AND IN PARTICULAR WINE, AND PLANT FOR THE IMPLEMENTATION OF THIS METHOD**

(30) Priority: 12.11.2024 IT 202400025449
(71) Applicant: Ecotecne S.r.l., 31030 Altivole TV (IT)
(72) Inventor: MARTINI, Bruno, 31100 Treviso TV (IT)
(74) Representative: De Sandre, Emanuele

(57) **Abstract**

The present invention relates to a method for refining wine, which comprises a phase in which wine (W) containing wood essences (E) passes through at least one ultrasonic conduit (21), said ultrasonic conduit (21) being connected to ultrasonic generating means (20) so as to transmit the ultrasonic waves generated by said ultrasonic generating means to said ultrasonic conduit (21). said ultrasonic conduit (21) being connected to ultrasonic generating means (20) so as to transmit the ultrasonic waves generated by said ultrasonic generating means to said wine (W) containing wood essences (E), said ultrasonic generating means (20) being arranged outside said at least one ultrasonic conduit (21).

## Description

### Technical field

The present invention relates to a method for refining an alcoholic beverage, in particular wine, and to a plant for carrying out this method.

Alcoholic beverage refers to wine and also other alcoholic beverages or spirits in general.

### Background

One of the main and most appreciated methods of ageing wine is barrique ageing.

The term 'barrique ageing' derives from the French feminine noun 'barrique', which refers to a barrel used for the maturation and storage of wine.

The term 'barrique wine' refers to wine that is left to age slowly in oak barrels.

The reactions that occur during the wine maturation process due to the contact between the oak wood and the wine itself influence various aspects of the wine. Barrique maturation stabilises the colour of the liquid, makes the wine less dry and smoother, promotes better ageing and gives it greater aromatic complexity. What differentiates barriques from other barrels is the material, the components that characterise them and their manufacture: techniques that are continuously being perfected thanks to the work carried out and refined by generations of winegrowers.

The wood used, generally oak, is seasoned in the open air, exposed to the sun and rain, for a period ranging from two to four years: the rain cleans it of a series of bitter particles, while the sun makes it less porous and more impermeable, thanks also to the metal hoops that hold the various staves together, thus protecting the wine from sudden oxygenation that could compromise its aromas and integrity.

The rules of good normal winemaking give a barrique used for wine a maximum life of two to three years.

The classic barrique ageing process, although well known, widespread and widely appreciated, is not without its drawbacks.

A first drawback is linked to the fact that, over time, the wood of the barrels tends to lose its aromatic essence, and the extraction of aromas is exhausted.

Good cellar practice also recommends 'changing' the wine every three months, i.e. emptying the barrique, washing it thoroughly and then refilling it with the same wine or another wine depending on the expected ageing time, generally two to three 'passes' for white wine and two for red wine.

All this makes properly barrique-aged wines much more expensive than their counterparts produced exclusively in concrete or steel tanks.

Another limitation of known barrel ageing techniques is related to the length of time the wine remains in the barrels.

In fact, completing a barrel ageing process can take from a few weeks to several months or even years, depending on the desired refinement.

Another drawback is that ageing barrels have a relatively short lifespan. Up to a certain point, barriques can be regenerated, i.e. lightly milled inside, washed, sanitised and re-toasted, which requires a corresponding expenditure of materials, processing and labour.

### Summary of the invention

The technical problem posed and solved by the present invention is therefore to develop a method for refining an alcoholic beverage, in particular wine, as well as a plant for implementing this method, capable of overcoming the aforementioned limitations of the known technique.

In particular, an important purpose of the invention is to develop a method for ageing wine that allows a barrel-ageing effect to be obtained in a much shorter period of time than with known barrel-ageing practices.

Another purpose of the present invention is to develop an energy-sustainable method that can be implemented with a plant that has low energy consumption. Another important purpose of the invention is to develop a rapid method and therefore to develop a plant with high production efficiency.

Another purpose of the present invention is to develop an extremely versatile and modular refinement method with respect to the scents, tastes, flavours, odours and aromas in general that are to be transferred to the wine being treated.

A further purpose of the present invention is to develop a refinement method and a plant for implementing this method that allow for a lower consumption of plant-based support materials, such as barrique barrels.

This task and these purposes are achieved by a method for refining an alcoholic beverage, in particular wine, according to claim 1, as well as by a plant for implementing this method according to claim 6.

Preferred features of the present invention are the subject of the respective dependent claims.

Further features and advantages of the invention will be apparent from the description of a preferred, but not exclusive, embodiment of the electric motor structure according to the invention, supported by the drawings provided for illustrative and non-limitative purposes in the attached tables and listed below.

### Brief description of the figures

Reference will be made to the figures in the attached drawings, in which:
- Figure 1 represents a schematic view of a plant according to the present invention for carrying out a method of refining wine, also according to the invention;
- Figure 2 shows a side sectional view of a detail of the plant according to the invention;
- Figure 3 shows a perspective view of the detail in Figure 2;
- Figure 4 shows a perspective view of a variant of the detail in Figure 2;
- Figure 5 shows a front view of another detail of the plant according to the invention.

The thicknesses and curvatures shown in the above figures are purely illustrative, are generally magnified and are not necessarily shown to scale.

### Detailed description of preferred embodiments

Various embodiments and variants of the invention will be described below with reference to the figures above.

Similar components are denoted in the various figures with the same reference number.

In the detailed description below, embodiments and variants additional to those already discussed in the description will be illustrated only insofar as they differ from what has already been described.

Furthermore, the various embodiments and variants described below may be used in combination, where compatible.

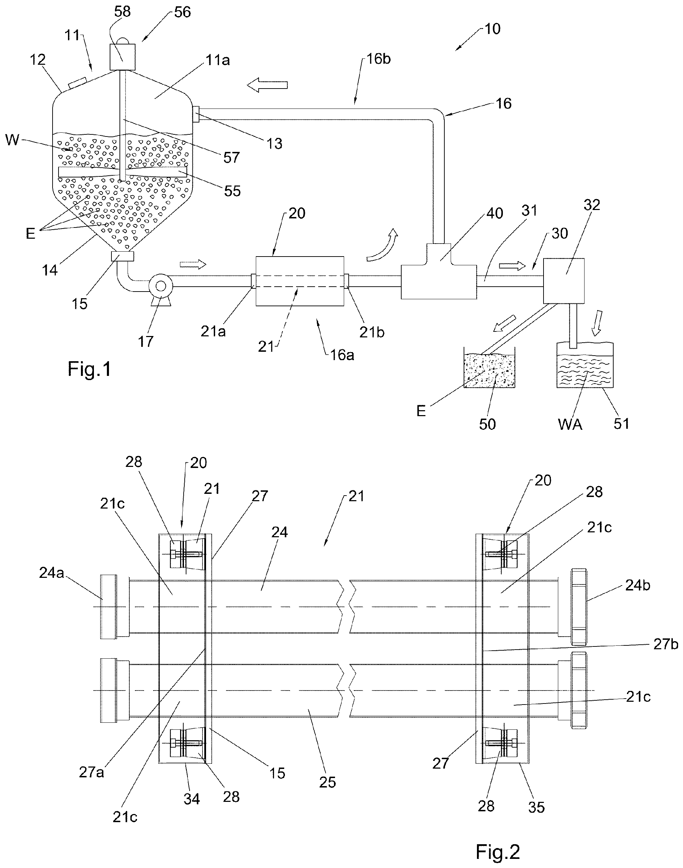

With initial reference to Figure 1, according to one embodiment of the invention, a method

With initial reference to Figure 1, a method for refining an alcoholic beverage, in particular wine, according to the present invention, is characterised in that it comprises a transit phase of a wine W, containing wood essences E, inside at least one ultrasonic duct 21, with passage through said ultrasonic duct 21.

This ultrasonic duct 21 is connected to ultrasonic generating means 20 in such a way as to transmit the ultrasonic waves generated by said ultrasonic generating means 20 to said wine W containing wood essences E.

The ultrasonic generating means 20 are arranged outside said at least one ultrasonic duct 21.

These ultrasonic generating means 20 are arranged outside said at least one ultrasonic duct 21 so as not to be in direct contact with said wine W containing wood essences E.

The method according to the present invention involves the use of a single ultrasonic duct 21, or several ultrasonic ducts 21 arranged in series.

The wine W is to be understood as an alcoholic beverage obtained from the alcoholic fermentation of sugars contained in grape must.

In general, as explained in the introduction, the method according to the present invention is applicable to alcoholic beverages and spirits in general.

The wood essences E comprise 'chips' or shavings or powders of wood material. These wood essences E are in their natural state or toasted, or a mixture of both types.

These wood essences E are preferably made of wood material with dimensions mainly between 2 mm and 5 cm.

These wood essences E are made of oak, chestnut, cherry or other woods typically used for making barrels, and in particular for ageing barrels.

The method according to the present invention involves the use of a single ultrasonic duct 21; in an alternative embodiment of the invention, there are several ultrasonic ducts arranged in parallel, so that these ultrasonic ducts are crossed in parallel in the same direction of crossing.

The method according to the present invention comprises the following operational steps:
a) loading a wine W containing wood essences E into a tank 11,
b) withdrawing said wine W comprising containing wood essence E from a collection bottom 14 of the tank 11 and pumping said wine W containing wood essences E into the ultrasonic duct 21 so that the wine W containing wood essences E continuously passes through said ultrasonic duct 21 from the inlet 21a of said ultrasonic duct 21 to the outlet 21b of said ultrasonic duct,
c) subjecting said wine W, containing wood essences E, to ultrasound determined by ultrasonic generating means 20, which ultrasonic generating means 20 operate at frequencies between 18 kHz and 30 kHz, with a power between 5 W/litre and 2000 W/litre;
d) returning the wine W containing wood essences E, exiting from said ultrasonic duct 21, to the upper part 11a of said tank 11,
e) repeating steps b) to d), defining an extraction cycle, until all the wine W containing wood essences E has been subjected to ultrasound inside said ultrasonic duct for a total period of time between 30 seconds and 30 minutes, preferably between 1 minute and 15 minutes.

Steps b) to d) are therefore to be understood as repeatable a number of times such as to subject the wine W containing wood essences E to the action of ultrasound inside the ultrasonic duct 21 for a total time interval of between 30 seconds and 30 minutes, preferably between 1 minute and 15 minutes.

The term 'total time interval' means that if, for example, wine W must remain in the ultrasonic duct 21 for 5 minutes and takes 1 minute to pass through the ultrasonic duct 21, then wine W must be recirculated 5 times.

Ultrasonic generating means 20 and the ultrasonic duct 21 are configured and connected in such a way that the temperature of the wine W containing wood essences E at the inlet 21a of said ultrasonic duct 21 is substantially equal to the temperature of said wine W containing wood essences E at the outlet 21b of said ultrasonic duct 21.

Alternatively, the ultrasonic generating means 20 and the ultrasonic duct 21 are configured and connected such that a temperature difference of the wine W containing wood essences E between the outlet 21b of said ultrasonic duct 21 and the inlet 21a of said ultrasonic duct 21 is between 1°C and 45°C.

The transit phase of the wine W containing wood essences inside the ultrasonic duct 21, with passage through the ultrasonic duct, is such that the temperature of the wine W containing the wood essences E at the inlet 21a of said ultrasonic duct 21 is substantially equal to the temperature of said wine W containing wood essences E at the outlet 21b of said ultrasonic duct 21, or such alternative increases by a temperature Delta of between 1°C and 45°C.

Thanks to this precaution, none of the substances present in wine W containing wood essences E are altered by a change in temperature, since there is no substantial change in temperature in wine W passing through the ultrasonic duct 21.

The ultrasonic generating means 20 comprise one or more ultrasonic vibration generators 28.

In particular, in this example of the invention, the ultrasonic generating means 20 comprise a plurality of ultrasonic vibration generators 28.

More specifically, these ultrasonic vibration generators 28 each consist of a piezoelectric or magnetostrictive ultrasonic transducer.

The method according to the present invention provides that, after phase e) comprising the extraction cycles, the wine W containing wood essences E is filtered in order to separate the wood essences E from a refined wine W.

The invention also relates to a plant 10 for ageing an alcoholic beverage, and in particular wine, and in particular the present invention relates to a plant for implementing a method according to the invention as described above.

This plant 10, clearly illustrated in Figure 1, comprises:
- a tank 11 for containing a wine W containing wood essences E; this tank 11 in turn comprises:
   - a lid 12, having a loading opening 13,
   - a collection bottom 14, having a discharge opening 15;
- a recirculation line 16 for the transit of said wine W containing wood essences E; this recirculation line 16 extends between the discharge opening 15 and the filling opening 13.

The recirculation line 16 comprises:
- at least one ultrasonic duct 21 having an inlet 21a and an outlet 21b, configured and positioned so as to be traversed internally by said wine W containing wood essences E,
- ultrasonic generating means 20 connected to the at least one ultrasonic duct 21, said ultrasonic generating means 20 being configured so as to transmit ultrasonic waves to said fluid mass M containing grape seeds V passing through said at least one ultrasonic duct 21;
- pumping means 17 configured to draw the fluid mass M from said discharge outlet 15, to induce the wine W containing wood essences E to pass through the at least one ultrasonic duct 21 and to move said wine W containing wood essences E, exiting from said at least one ultrasonic duct 21, towards said loading outlet 13.

The plant 10 comprises a diverter valve 40 with at least three ways.

For example, but not exclusively, the diverter valve 40 is of the three-way type. This diverter valve 40 is configured to divert the wine W containing wood essences E from said recirculation line 16 to a separation line 30.

The separation line 30 is configured to remove said wood essences E from the wine W that has been treated, which we will refer to below as refined wine WA. In particular, the separation line 30 comprises a discharge duct 31 configured to connect the at least three-way valve 40 with separation means 32.

These separation means 32 are configured to separate the powders or chips or shavings of the wood essences E from the aged wine WA.

The wood essences E are collected in a first container 50, while the aged wine WA is collected in a second container 51.

The separation means 32 consist, for example, of a vibrating sieve screening device.

Alternatively, the separation means consist of a plate filter.

Yet another alternative is for the separation means to consist of a tangential filter. Other filtration systems for oenology, which are also known per se, are also intended to be used as separation means.

In general, the separation means 32 comprise a filter configured to retain the dust or chips or shavings of the wood essences E and to allow the refined wine WA to pass through.

The pumping means 17 comprise, again by way of example and not exclusively, a peristaltic pump or a piston pump.

Alternatively, the pumping means 17 comprise a single-screw pump. Alternatively, the pumping means 17 comprise a lobe pump, or in general another type of pump that does not cause fragmentation of the bodies contained in the pumped fluid.

The recirculation line 16 essentially comprises two branches:
- a first branch 16a defined between the discharge outlet 15 and the at least three-way valve 40,
- a second branch 16b defined between the at least three-way valve 40 and the inlet 13.

In this example, the vibration generating means 20, with the ultrasonic duct 21, are positioned in the first branch 16a.

The pumping means 17 are arranged upstream of the ultrasonic duct 21.

In the embodiment of the plant 10 according to the present invention, the at least one ultrasonic duct 21 comprises a single duct.

In particular, this ultrasonic duct 21 comprises a single duct which in turn comprises a plurality of tubular sections placed side by side and connected in series.

The three-way valve 40 is maintained in a recirculation position for the wine W in the recirculation line 16 during the ultrasonic treatment of the wine W, and is switched to a discharge position when the ultrasonic treatment is completed, so as to connect the first branch 16a and the separation line 30.

More specifically, and by way of example, this ultrasonic duct 21 comprises a single duct which in turn comprises a plurality of tubular sections 22, 23, 24 and 25 placed side by side so as to be arranged with their respective longitudinal axes parallel to each other, and connected in series by means of curved sleeves 26. The ultrasonic generating means 20 are connected to said at least one ultrasonic duct 21 so as to allow the transmission to said fluid mass M of vibrations such as to cause the generation of ultrasonic cavitation in said wine W containing wood essences E.

In particular, in the present embodiment, the ultrasonic generating means 20 comprise at least one support and transmission body 27 configured to support a plurality of ultrasonic vibration generators 28 for the vibration of said at least one ultrasonic duct 21, each fixing portion 21c of said at least one ultrasonic duct 21, which is fixed to a corresponding support and transmission body 27, being surrounded by at least two ultrasonic vibration generators 26.

These ultrasonic generator means 20 are well described in patent EP3612037B1 in the name of the same owner.

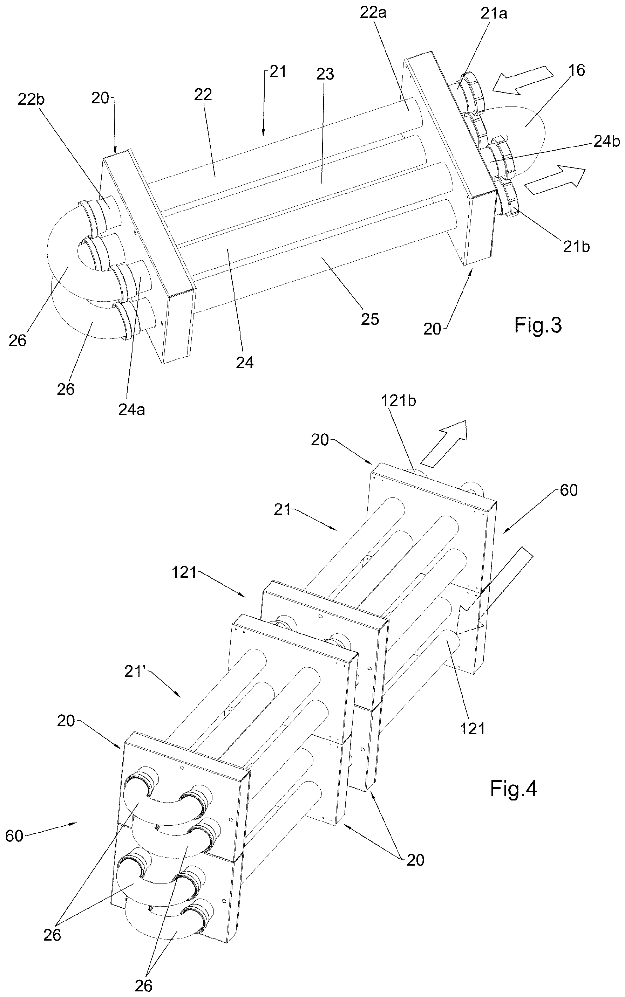

More specifically, as shown in Figures 2 and 3, the ultrasonic duct 21 comprises at least two tubular sections 24, 25, and preferably four tubular sections 22, 23, 24 and 25, and said ultrasonic generating means 20 comprise two support bodies 27.

The four tubular sections 22, 23, 24 and 25, which are parallel and side by side, are fixed to the two support bodies 27.

Each tubular section 22, 23, 24 and 25 therefore has two fixing portions 21c, these fixing portions 21c being fixed to the support bodies 27 and 28.

Each fixing portion 21c is surrounded by at least two vibration generators 28, for example by four ultrasonic vibration generators 28.

For example, four generators 28 surround the fixing portion 21a of a tubular section 24 with a support and transmission body 27.

Each of the support and transmission bodies 27 therefore carries a number of vibration generators such that each fixing portion 21a passing through it is surrounded by four vibration generators as described above.

Each support and transmission body 27 consists of a metal plate with through holes shaped to be traversed by the tubular sections 22, 23, 24 and 25.

The tubular sections 22, 23, 24 and 25 are straight.

Each support and transmission body 27 is crossed by the tubular sections 22, 23, 24 and 25 in a direction orthogonal to its position.

The ultrasonic vibration generators transmit the vibrations to the support and transmission body 27, i.e. to the plate that carries them, and from the support and transmission body 27 these vibrations are propagated to the tubular sections 22, 23, 24, 25.

The tubular sections 22, 23, 24 and 25 are made of metal tubes.

The ultrasonic vibration generators emit vibrations mainly in a direction orthogonal to the plate that carries them, i.e. in a direction parallel to the axes of the tubular sections 22, 23, 24 and 25.

Thanks to this particular arrangement, the tubular sections 22, 23, 24 and 25 are subjected to
vibrations mainly in the axial direction, i.e. in the direction of their length; in this way, each tubular section 22, 23, 24 and 25 is subjected to a series of micrometric compressions-elongations in the axial direction, determined by the propagation of the vibrations emitted by the vibration generators; these vibrations in the axial direction cause corresponding vibrations in the radial direction, which propagate concentrically on each section of each tubular section, along the entire length of each tubular element.

Each support body 27 is fixed to the tubular sections 22, 23, 24 and 25 by welding. This welding is preferably of the type with material added to both sides of the support and transmission body 27.

The tubular sections 22, 23, 24, 25 each consist of a metal tube having the same internal diameter as the others, so that two tubular sections connected in series do not cause any changes in section.

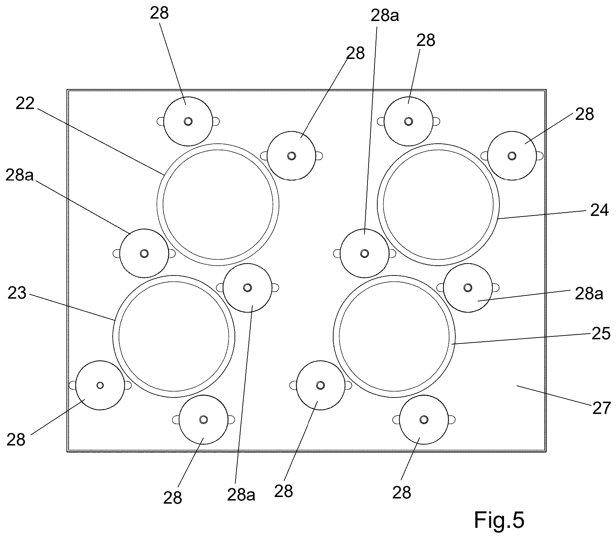

In this example, each support and transmission body 27 carries twelve ultrasonic vibration generators 28, as clearly shown in the front view of Figure 5.

Some of the ultrasonic vibration generators carried by a support body 27 cooperate to surround more than one fixing portion 21c of the tubular sections 22, 23, 24, 25; for example, as shown in Figure 3, the ultrasonic vibration generators 28a located in an intermediate zone between the two sections of tubular element 22 and 23 and 24 and 25 respectively, cooperate to surround both a first fixing portion 21c of a tubular section 24 and a second fixing portion 21c of another adjacent tubular section 25.

Thanks to this positioning of the ultrasonic vibration generators on their respective support and transmission bodies, the action of the vibration generators is synergistic and allows savings in the use of two or more additional vibration generators.

The ultrasonic vibration generators carried by the same support body 27 are mounted on the same face of the support body 27 itself.

The ultrasonic vibration generators are fixed to the respective support bodies 27 and are excited in such a way that their action in the axial direction on the tubular sections 22, 23, 24, 25 is added together.

In the embodiment described here, the vibration generators are fixed to the respective support bodies 27 on two opposite faces, 27a and 27b respectively, as shown in Figure 2.

Each ultrasonic vibration generator 28, 28a consists of a sonotrode.

The ultrasonic vibration generators 28, 28a carried by the same support and transmission body 27 are enclosed within protective casings 34 and 35 respectively, to protect them from accidental contact, in particular with washing liquids and treated liquids.

The ends of each tubular section 22, 23, 24, 25 of an ultrasonic duct 21, for example the ends 22a and 22b of a first tubular section 22 and the ends 24a and 24b of a second tubular section 24, can be connected to corresponding ends of the tubular sections, of a second equal structure of apparatus 21', as exemplified in figure 4.

An ultrasonic transmission module 60 is therefore defined, comprising:
- at least two parallel and side-by-side tubular sections 22, 23, for example four tubular sections 22, 23, 24, 25, of an ultrasonic duct 21,
- fixed to two support and transmission bodies 27,
where each fixing portion 21c of each tubular section 22 is surrounded by at least two ultrasonic vibration generators 28, 28a of the ultrasonic vibration generators supported by the support and transmission bodies 27.

The ultrasonic duct 121, as exemplified in Figure 4, is composed of two or more modules 60 and has an inlet 121a and an outlet 121b.

The ultrasonic ducts 21 and 121 are therefore serpentine ducts.

The ultrasonic generating means 20 are configured in such a way that they operate simultaneously on all the tubular sections 22, 23, 24, 25 of which an ultrasonic duct 21, 121 is composed.

In this way, with a single passage through the ultrasonic duct 21, 121, the wine W containing wood essences E is subjected to the action of ultrasound as many times as there are tubular sections 22, 23, 24, 25 comprising the ultrasonic duct 21, 121.

The plant 10 according to the invention is therefore highly synergistic and relatively low in consumption, since the energy of each ultrasonic generator 28, 28a is distributed synergistically over the entire length of each of the side-by-side tubular sections 22, 23, 24, 25.

In particular, a module 60 as described above has a power consumption of approximately 0.09 watts/cm3.

Therefore, the method according to the present invention is also characterised by the fact that the power density of the ultrasound, which is transmitted from the ultrasonic generating means 20 to the fluid mass (M) passing through the ultrasonic duct 21, is approximately 0.09 W/cm3.

In other words, the plant according to the present invention comprises a recirculation circuit for treating a wine W containing wood essences E, which circuit comprises a containment tank, ultrasonic generating means applied to an ultrasonic duct, a pump for defining the appropriate flow rate to pass through the ultrasonic duct, and a separation line through which, at the end of the ultrasound treatment, the refined wine WA is filtered to remove the residues of the wood essences E.

The refined wine WA is then sealed in special containers for future use or, alternatively, it can be transported via a special line directly to a bottling machine. The pumping means 17 may comprise a piston pump, as mentioned above, or a peristaltic pump.

These pumping means 17 have internal passages that may be enlarged to facilitate the passage of wine W with wood essences E suspended therein.

By way of example, the method and plant according to the invention operate as described below.

In the presence of a 1000-litre tank 11 and an ultrasonic duct 21 with a total internal volume of 100 litres, in order to obtain an average treatment lasting 3 minutes for all the wine W containing wood essences E, the plant 10 and the ultrasonic generating means 20 must operate for 30 minutes, with a flow rate through the ultrasonic duct of 100 I/min.

Therefore, if I have 1000 litres and the pipe is 100 litres, and the operator wants a 1-minute treatment, it will take a total of 10 minutes to pass 1000 litres through the 100-litre pipe. If I want a 10-minute treatment, I need 100 minutes for 1000 litres.

Tank 11 advantageously includes a mixing propeller 55 supported and moved by corresponding moving means 56.

These drive means 56 comprise, for example, a drive shaft 57 to which the propeller 55 is attached and a gear motor 58 attached to the tank 11. Therefore, with the present invention, a method for refining wine, and alcoholic or super-alcoholic beverages in general, has been developed that allows a barrique effect to be obtained in a much shorter time than with known barrique practices.

In addition, the invention has developed an energy-sustainable method that can be implemented with a plant that has low energy consumption.

Furthermore, the invention has developed a rapid method and, therefore, a highly efficient production plant.

Furthermore, the invention has developed an extremely versatile and modular refinement method with respect to the scents, tastes, flavours, smells and aromas in general that are to be transferred to the wine being treated.

Furthermore, the invention has developed a refinement method and a plant to implement this method that allow for lower consumption of plant-based support materials, such as barrique barrels.

The present invention has been described above with reference to preferred embodiments. It is understood that other embodiments may exist that relate to the same inventive core, as defined by the scope of protection of the claims set out below.

## Claims

1. Method of refining a wine **characterised in that** it comprises a transit phase of a wine (W) containing wood essences (E), inside at least one ultrasonic duct (21), with crossing of said ultrasonic duct (21), said ultrasonic duct (21) being connected to ultrasonic generating means (20) in such a way as to transmit the ultrasounds generated by said ultrasonic generating means to said wine (W) containing wood essences (E), said ultrasonic generating means (20) being arranged outside of said at least one ultrasonic duct (21).

2. Method according to claim 1, **characterized in that** it comprises the following operating phases:
a) loading a wine (W) containing wood essences (E) into a tank (11),
b) withdrawing said wine (W) containing wood essences (E) from a collection bottom (14) of said tank (11) and pumping said wine (W) with wood essences (E) into said ultrasonic duct (21) so that said wine (V) containing wood essences (E) continuously passes through said ultrasonic duct (21) from the inlet (21a) of said ultrasonic duct (21) to the outlet (21b) of said ultrasonic duct (21),
c) subjecting said wine (W) containing wood essences (E) to ultrasounds determined by ultrasonic generator means (20) operating at frequencies between 18 kHz and 30 kHz, with a power between 5 W/litre and 2000 W/litre;
d) return said wine (W) containing wood essences (E), exiting from said ultrasonic duct (21), to the upper part (11a) of said tank (11),
e) repeat phases from b) to d), defining an extraction cycle, until all the wine (W) containing wood essences (E) is subjected to ultrasound inside said ultrasonic duct (21) for a total period of time between 30 seconds and 30 minutes.

3. Method according to one or more of the preceding claims, **characterized in that** said ultrasonic generating means (20) and said ultrasonic duct (21) are configured and connected in such a way that the temperature of said wine (W) containing wood essences (E) at the inlet (21a) of said ultrasonic duct (21) is substantially equal to the temperature of said wine (W) containing wood essences (E) at the outlet (21b) of said ultrasonic duct 21, or alternatively said ultrasonic generator means (20) and the ultrasonic duct (21) are configured and connected in such a way that a temperature difference of said wine (W) containing wood essences (E) between the outlet (21b) of said ultrasonic duct (21) and the inlet (21a) of said ultrasonic duct (21) is between 1°C and 45°C.

4. Method according to one or more of the preceding claims, **characterized in that** said ultrasound generating means (20) comprise a plurality of ultrasonic transducers of the piezoelectric type, or of the magnetostrictive type.

5. Method according to one or more of the preceding claims, **characterized in that**, subsequently to said phase e) of extraction cycles, said wine (W) containing wood essences (E) is filtered in such a way as to separate the exhausted wood essences (E) from said wine (W).

6. Plant (10) for the refinement of wines, which is **characterised in that** it comprises:
- a tank (11) for the containment of a wine (W) containing wood essences (E), said tank (11) comprising in turn:
- a lid (12), having a loading mouth (13),
- a collection bottom (14), having a discharge mouth (15);
- a recirculation line (16) for the transit of said wine (W) containing wood essences (E), said recirculation line (16) extending between said discharge mouth (15) and said loading mouth (13), said recirculation line (16) comprising:
- at least one ultrasonic conduit (21) having an inlet mouth (21a) and an outlet mouth (21b), configured and positioned so as to be internally traversed by said wine (W) containing wood essences (E),
- ultrasonic generating means (20) connected to said at least one ultrasonic conduit (21), said ultrasonic generating means (20) being configured so as to transmit ultrasound to said wine (W) containing wood essences (E) which passes through said at least one ultrasonic conduit (21);
- pumping means (17) configured to withdraw said wine (W) containing wood essences (E) from said discharge mouth (15), to induce said wine (W) containing wood essences (E) to pass through said at least one ultrasonic duct (21) and to move said wine (W) containing wood essences (E) exiting from said at least one ultrasonic duct (21), towards said loading mouth (13).

7. Plant according to the previous claim, **characterized in that** it comprises a diverter valve (40) with at least three ways, said diverter valve (40) being configured to divert said wine (W) containing wood essences (E) from said recirculation line (16) to a separation line (30), said separation line (30) being configured to remove said wood essences (E) from said wine (W).

8. Plant according to claim 6 or 7, **characterised in that** said ultrasonic generating means (20) are connected to said at least one ultrasonic duct (21) so as to allow the transmission to said wine (M) of vibrations such as to determine the generation of ultrasonic cavitation in said wine (W) containing wood essences (E).

9. Plant according to one or more of claims 6 and 7, **characterised in that** said ultrasonic generating means (20) comprise at least one support and transmission body (27) configured to support a plurality of ultrasonic vibration generators (28) for the vibration of said at least one ultrasonic duct (21), each portion (21c) of said at least one ultrasonic duct (21), which is fixed to a corresponding support and transmission body (27), being surrounded by at least two ultrasonic vibration generators (26).

10. Plant according to one or more of claims 6 to 9, **characterised in that** said separation line (30) comprises a discharge duct (31) configured to connect said at least three-way valve (40) with separation means (32), said separation means (32) being configured to separate the wood essences (E) from said wine (W) and to collect said refined wine (WA).
